(19) Europäisches Patentamt
European Patent Office
Office européen des brevets

(11) **EP 3 835 090 B1**

(12) **EUROPEAN PATENT SPECIFICATION**

(45) Date of publication and mention
of the grant of the patent:
**19.02.2025 Bulletin 2025/08**

(21) Application number: **19847822.4**

(22) Date of filing: **18.06.2019**

(51) International Patent Classification (IPC):
**B60C 19/00** (2006.01)    **G01H 17/00** (2006.01)
**B60C 23/04** (2006.01)    **B60C 23/06** (2006.01)

(52) Cooperative Patent Classification (CPC):
**B60C 23/0493; B60C 23/0488; B60C 23/064;**
**G01H 17/00;** B60C 2019/004

(86) International application number:
**PCT/JP2019/024129**

(87) International publication number:
**WO 2020/031513 (13.02.2020 Gazette 2020/07)**

(54) **TIRE TYPE DISTINGUISHING METHOD AND TIRE TYPE DISTINGUISHING DEVICE**

REIFENTYPUNTERSCHEIDUNGSVERFAHREN UND
REIFENTYPUNTERSCHEIDUNGSVORRICHTUNG

PROCÉDÉ DE DISTINCTION DE TYPE DE PNEU ET DISPOSITIF DE DISTINCTION DE TYPE DE
PNEU

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **09.08.2018 JP 2018150858**

(43) Date of publication of application:
**16.06.2021 Bulletin 2021/24**

(73) Proprietor: **Bridgestone Corporation**
**Chuo-Ku**
**Tokyo 104-8340 (JP)**

(72) Inventors:
• **ISHII Keita**
**Tokyo 104-8340 (JP)**
• **HAYASHI Kazuo**
**Tokyo 104-8340 (JP)**
• **KAWAMATA Satoru**
**Tokyo 104-8340 (JP)**
• **HANEDA Tomoyuki**
**Tokyo 104-8340 (JP)**

(74) Representative: **Marks & Clerk LLP**
**15 Fetter Lane**
**London EC4A 1BW (GB)**

(56) References cited:
EP-A1- 3 228 515      WO-A1-2017/103474
GB-A- 2 547 937       JP-A- 2003 312 220
JP-A- 2006 131 137    JP-A- 2010 521 364
JP-A- 2014 035 279    JP-A- 2016 537 259
JP-A- 2018 004 418    JP-A- 2018 026 111
JP-A- H09 188 114     US-A1- 2010 274 607
US-A1- 2010 274 607   US-A1- 2012 207 340
US-A1- 2017 190 223

## Description

TECHNICAL FIELD

The present invention relates to a method and a device for determining a tire type with the use of acceleration date inputted to a tire mounted on a vehicle.

BACKGROURND

To know information such as the type of tire (summer / studless, and the like) and the brand type (such as the tire named AAAA of BBBB company and the like) mounted on a vehicle, it is required that a person sees the engraved marking on the tire, or RFID or the like be attached, however, there is no means for knowing the information from the vehicle side.

If the information on the type of tire mounted can be obtained at the vehicle side, by sending the information to a vehicle control device and switching the operation timing of ABS to one suitable for the tire type, for example, improvement of the running performance of the vehicle can be expected.

Conventionally, there has been proposed, as a method of determining a tire type, a method in which a vibration sensor that measures vibration in a biaxial direction or a triaxial direction is attached on the road surface within a predetermined distance from a tollgate on a highway, and the frequency characteristic of the vibration of the road surface detected by the vibration sensor is detected, to thereby determine whether the tire mounted on a vehicle, which has passed through the road surface on which the vibration sensor is attached, is a summer tire or a winter tire (for example, see Patent Document 1).

Further, according to Patent Document 1, the safety of driving on the highway is provide by not allowing to pass through the tollgate, in a case where the determined tire type is not a tire suitable for the season (for example, a case where a summer tire is mounted in winter season), unless the tire is replaced with a winter tire.

A method of determining a tire type from an output of an acceleration sensor attached to an inner surface of a tire tread is known from JP2018026111A.

CITATION DOCUMENT

Patent Document

Patent Document 1: Japanese Patent Unexamined Application No. 2017-43147

SUMMARY OF THE INVENTION

Technical Problem

However, in the above-mentioned conventional method, the vehicle with the tire type having been determined is specified by a manager of the tollgate at a time point when the vehicle that has passed the vibration sensor reached the tollgate through a predetermined course from the installation location of the vibration sensor. Thus, it has been difficult to determine the tire type on general roads.

Furthermore, in the above-mentioned conventional method, not only it is necessary to attach a vibration sensor on the road in order to determine the tire type, but also the tire type could not be determined from the vehicle side.

The present invention has been made in view of the conventional problems, and aims at providing a method and a device for determining a tire type of a running tire from the vehicle side.

Solution to Problem

An aspect of the present invention relates to a method of determining a tire type, which is the type of a tire, from an output of an acceleration sensor attached to an inner surface side of a tire tread of a tire mounted on a vehicle, the method comprising:

a step of detecting an acceleration waveform from the output of the acceleration sensor;
a step of extracting a feature vector from the acceleration waveform; and
a step of determining, from the extracted feature vector, the tire type of the tire by a machine learning algorithm such as a support vector machine, a decision tree or a neural network,
in which, the step of determining the tire type includes determining the tire type of the tire on the basis of the extracted feature vector and a determination model in which a feature vector obtained in advance for each tire type has been configured as learning data.

As a result, the tire type of the tire mounted on the vehicle can be determined at the vehicle side, so that the running safety performance of the vehicle can be improved by controlling the vehicle using the information of this tire type.

Note that the above-described summary of the invention does not enumerate all the necessary features of the present invention, and subcombinations of these feature groups can also be inventions.

BRIED DESCRIPTION OF THE DRAWINGS

FIG. 1 is a diagram illustrating a configuration of a tire type determination device according to a first embodiment.
Fig. 2 is a diagram illustrating an example of a sensor mounting position.

Fig. 3 is a diagram illustrating an example of a time-series waveform of tire vibration.

FIG. 4 is a diagram illustrating a method of calculating a feature vector from the time-series waveform of the tire vibration.

FIG. 5 is a flowchart illustrating a tire type determination method according to the first embodiment.

FIG. 6 is a diagram illustrating a configuration of a tire type determination device according to a second embodiment.

Fig. 7 is a diagram illustrating how to divide into the first half waveform and the second half waveform.

Fig. 8 is a diagram illustrating an example of a decision tree.

FIG. 9 is a flowchart illustrating a tire type determination method according to the second embodiment.

FIG. 10 is a diagram illustrating a configuration of a tire type determination device according to a third embodiment.

Fig. 11 is a diagram illustrating an example of a neural network.

FIG. 12 is a flowchart illustrating a tire type determination method according to the third embodiment.

## DESCRIPTION OF EMBODIMENTS

### First Embodiment

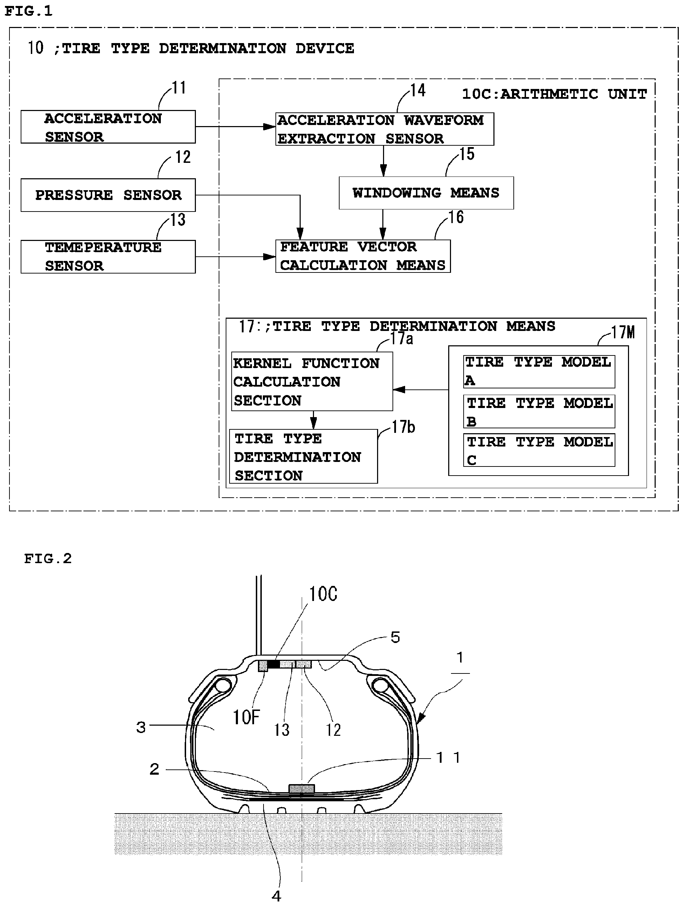

FIG. 1 is a diagram illustrating a configuration of a tire type determination device 10 according to a first embodiment. The tire type determination device 10 includes an acceleration sensor 11, a pressure sensor 12, a temperature sensor 13, an acceleration waveform extraction means 14, a windowing means 15, a feature vector calculation means 16, and a tire type determination means 17.

Each of the acceleration waveform extraction means 14 to the tire type determination means 17 is composed of, for example, computer software and a memory such as a RAM or the like.

Hereinafter, the acceleration waveform extraction means 14 to the tire type determination means 17 will be referred to as an arithmetic unit 10C.

As illustrated in FIG. 2, the acceleration sensor 11 is arranged substantially in the center of an inner liner section 2 of the tire 1 on the tire air chamber 3 side, and detects, as acceleration, the vibration input from the road surface to the tread 4 of the tire 1. In this embodiment, the acceleration sensor 11 is so disposed that the detection direction of the acceleration sensor 11 coincides with the tire circumferential direction, to thereby detect the tire circumferential vibration input from the road surface. Hereinafter, the position of the acceleration sensor 11 (strictly speaking, the position of the surface of the tread 4 located outer side of the acceleration sensor 11 in the radial direction) is referred to as a measurement point.

Further, the pressure sensor 12 and the temperature sensor 13 are disposed on the rim 5 on the tire air chamber 3 side, and respectively measures the air pressure in the tire 1 (hereinafter referred to as the internal pressure P) and the temperature T in the tire air chamber 3.

In this embodiment, the arithmetic unit 10C is also disposed in the tire 1, and a result of the determination of the tire type is sent by the transmitter 10F to, for example, a not-shown vehicle control device provided on the vehicle body side.

The acceleration waveform extraction means 14 extracts, for each rotation of the tire, an acceleration waveform which is a time-series waveform of the tire vibration, from the tire vibration signal detected by the acceleration sensor 11.

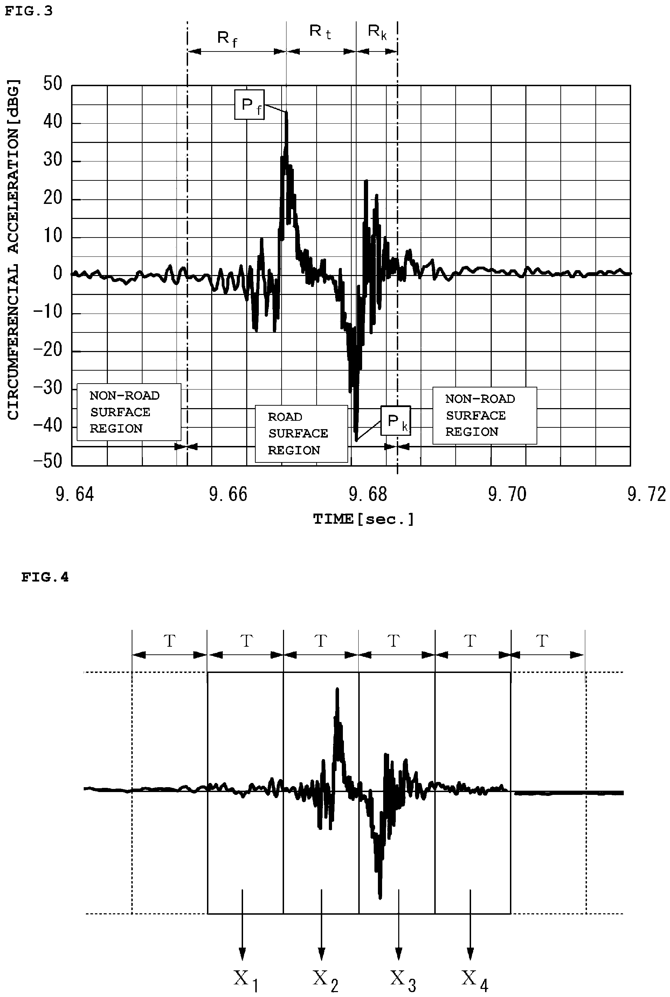

FIG. 3 is a diagram illustrating an example of the acceleration waveform. The acceleration waveform of the tire vibration has large peaks near a step-in position and near a kick-out position, and vibrations differing depending on the tire type appear in the pre-step-in region $R_f$ which is a region before the land portion of the tire 1 contacts the ground, and the post-kick-out region $R_k$ which is a region after the land portion of the tire 1 has left the ground. On the other hand, in a region before the pre-step-in region $R_f$ and in a region after the post-kick-out region $R_k$ (hereinafter referred to as the non-road surface region), the vibration level is small and the tire type information is not included.

As illustrated in FIG. 4, the windowing means 15 windows the extracted acceleration waveform with a preset time width (also referred to as a time window width) T, extracts a time-series waveform of tire vibration for each time window, and sends the extracted time-series waveforms to the feature vector calculation means 16.

Of the time-series waveforms of tire vibration extracted for the respective time windows, time-series waveforms of regions that do not include all of the pre-step-in region $R_f$, the ground contact region Rt and the post-kick-out region $R_k$ (hereinafter referred to as the non-road surface region) do not include information, as described above. Therefore, in this embodiment, in order to speed up the calculation speed of the kernel function, the waveforms in the non-road surface regions are not sent to the feature vector calculation means 16.

As the definition of the non-road surface region, for example, a background level may be set for the acceleration waveform, and a region having a vibration level smaller than this background level may be defined as the non-road surface region.

As illustrated in FIG. 4, the feature vector calculation means 16 obtains, for each of the extracted acceleration waveforms in each of the time windows, N feature vector $X_i$ which includes, as components thereof, k acceleration data $a_{ik}$ calculated from the acceleration waveforms an internal pressure $P_a$ measured by the pressure sensor 12 and a temperature $T_b$ in the tire air chamber 3 measured by the temperature sensor 13.

Here, N is the number of the extracted acceleration waveforms in the time windows.

In this embodiment, vibration levels (power values of filter filtrated waves) in the specific frequency band, which were obtained by passing the acceleration waveform of each time window through bandpass filters of 0-1kHz, 1-2kHz, 2-3kHz, 3-4kHz, and 4-5kHz, respectively, were set as acceleration data $a_{ik}$ (k = 1 to 6).

That is, the feature vector is $X_i = (a_{i1}, a_{i2}, a_{i3}, a_{i4}, a_{i5}, a_{i6}, a_{i7}, a_{i8})$, where $a_{i7} = P_a$, and $a_{i8} = T_a$.

The tire type determination means 17 includes a kernel function calculation section 17a, a tire type determination section 17b and a storage section 17M, and uses a support vector machine (SVM), which is one of the methods of the machine learning algorithm, to determine the tire type of the tire 1 mounted on the vehicle.

Now, an explanation is given as to the tire type model for determining the tire type.

The tire type model is configured by the SVM using, as learning data, the tire type vector $Y_z$ ($y_{jk}$) which is the characteristic vector in each window calculated from the acceleration waveforms obtained by running, at various speeds, a test vehicle with tires of different tire types A, B and C to which the acceleration sensor 11, the pressure sensor 12 and the temperature sensor 13 are attached, respectively. Hereinafter, The $Y_z$ ($y_{jk}$) is referred to simply as $Y_z$.

As the tire types A, B and C, three different types of summer tires of different manufacturers are considered, for example.

The method of calculating the tire type feature vector $Y_K$ is the same as for the feature vector $X_i$., and the components of the vector $Y_K$ are k acceleration data $b_{jk}$ calculated from the acceleration waveform, the internal pressure $P_b$ measured by the pressure sensor 12, and the temperature $T_b$ in the tire air chamber 3 measured by the temperature sensor 13.

The storage section 17M stores three tire type models (Z = A, B, C) for separating, by the discriminant function $f_K$ (x) representing the separation hyperplane, the tire of the tire type A from tires of other tire types, the tire of the tire type B from tires of the other tire types, and the tire of the tire type C from tires of the other tire types, which have been obtained in advance.

The tire type model is composed of a tire type feature vector $Y_{ZSv}$ which has a small distance from the discriminant function $f_Z$ (x) (for example, the Lagrangian multiplier $\lambda_Z$ has $\lambda \geq 0.3$), and the Lagrangian multiplier $\lambda_Z$ corresponding to this $Y_{KSv}$.

Hereinafter, the above-mentioned $Y_{ZSV}$ is referred to as the reference feature vector.

The kernel function calculation section 17a calculates the kernel function $K_Z$ (X, Y) from the feature vector $X_i$ calculated by the feature vector calculation means 16, and the reference feature vector $Y_{ZSv}$ stored in the storage section 17M and the Lagrangian multiplier $\lambda_Z$.

In this embodiment, the global alignment kernel function (GA kernel) is used as the kernel function $K_Z$ (X, Y).

The GA kernel $K_Z$ (X, Y) is calculated by the following formula.

$$K_Z(X,Y) = \sum_{i=1}^{m} \sum_{j=1}^{n} \kappa_{ij}(X_i, Y_j) \quad \cdots\cdots (1)$$

$$\kappa_{ij}(X_i, Y_j) = \exp\left(\frac{\|X_i - Y_j\|^2}{\sigma^2}\right) \quad \cdots\cdots (2)$$

where $\kappa_{ij}$ ($X_i$, $Y_j$) is the local kernel and the GA kernel $K_Z$ (X, Y) is obtained from the total sum or total product of the local kernel $\kappa_{ij}$ ($X_i$, $Y_j$).

In addition, since the time window width T is constant as described above, the number of windows M, N depends on the vehicle speed (strictly speaking, the wheel rotation speed), however, by using the GA kernel $K_{GZ}$ (X, Y) as the kernel function, as in this embodiment, even when the number M, N of the acceleration waveforms in the respective time windows differs from each other, the tire type can be determined with accuracy.

The tire type determination means 17 determines the tire type (Z = A, B, C) on the basis of the value of the discriminant function $f_Z$ (x) using the kernel function $K_Z$ (X, Y) shown in the following equations (3) to (5).

$$f_A = \sum_{\alpha=1}^{N_{ASV}} \lambda_{A\alpha} z_{A\alpha} K_A(X, Y_\alpha) - b_A \quad \cdots\cdots (3)$$

$$f_B = \sum_{\alpha=1}^{N_{BSV}} \lambda_{B\alpha} z_{B\alpha} K_B(X, Y_\alpha) - b_B \quad \cdots\cdots (4)$$

$$f_C = \sum_{\alpha=1}^{N_{SSV}} \lambda_{C\alpha} z_{C\alpha} K_C(X, Y_\alpha) - b_C \quad \cdots\cdots (5)$$

where $f_A$ is a discriminant function that discriminates the tire of tire type A from other tire types, $f_B$ is a discriminant function that discriminates the tire of tire type B from the other tire types, and $f_C$ is a discriminant function that discriminates the tire of tire type C from the other tire types.

Furthermore, $N_{ASV}$ is the number of support vectors for the tire type model A, $N_{BSV}$ is the number of support vectors for the tire type model B and $N_{CSV}$ is the number of support vectors for the tire type model C.

In this embodiment, the discriminant functions $f_A$, $f_B$ and $f_C$ are calculated, respectively, and the tire type is determined from the discriminant function which shows the largest value of the calculated discriminant function $f_K$.

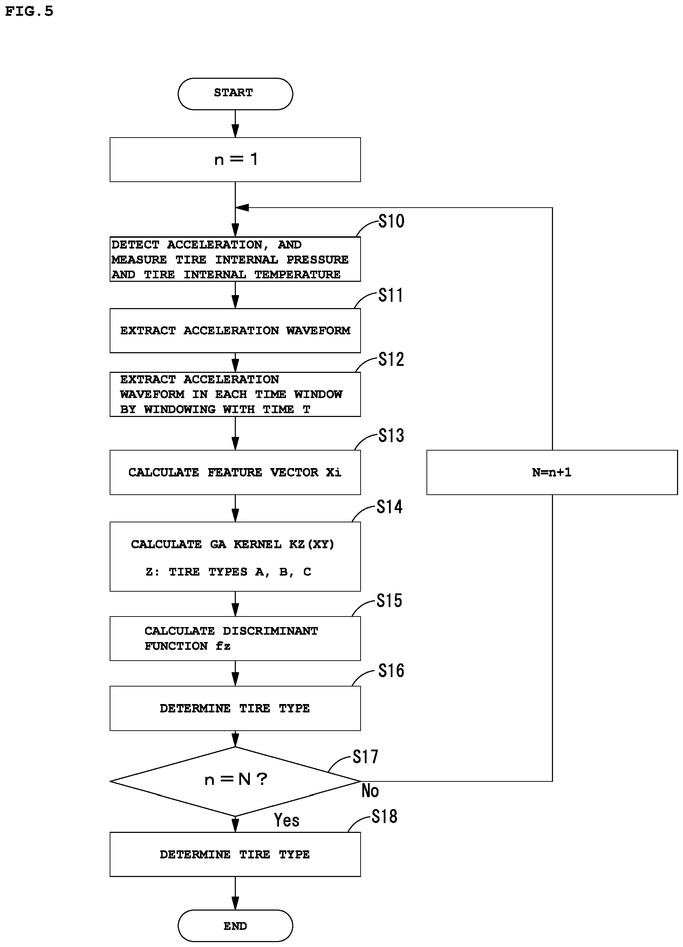

Next, an explanation is given as to the tire type determination method using the tire type determination device 10, with reference to the flowchart of FIG. 5.

In this embodiment, the tire type determination is performed for every one rotation of the tire and the tire type is determined by majority decision of N rotations. In this embodiment, the number of rotations N is set to 100 times.

First, the acceleration input to the tire 1 is detected by the acceleration sensor 11, and the tire internal pressure $P_a$ and the tire internal temperature $T_a$ are measured by the pressure sensor 12 and the temperature sensor 13, respectively (Step S10).

Next, from the detected acceleration signal, the acceleration waveform, which is a time-series waveform of the tire vibration, is extracted (Step S11), and then this extracted acceleration waveform is windowed by the time width T to obtain the time-series waveform in each time window (Step S12).

Next, a vibration level (a power values of the filter filtered wave) in a specific frequency band is calculated for each of the extracted time-series waveforms in each of the time windows, and these are used as the acceleration data $a_{ik}$ (k = 1-6), which is the component of the feature vector $X_i$, and the internal pressure $P_a$ and the tire internal temperature $T_a$ are added to the component of the feature vector $X_i$ (Step S13).

That is, the feature vector is $X_i = (a_{i1}, a_{i2}, a_{i3}, a_{i4}, a_{i5}, ai5, a_{i6}, a_{i7}, a_{i8})$, where $a_{i7} = P_a$ and $a_{i8} = T_a$.

Next, the GA kernel function $K_Z (X, Y)$ of the tire type Z is calculated from the calculated feature vector $X_i$ and the support vector $Y_Z$ of the tire type model recorded in the storage section 17M of the tire type determination means 17 (Step S14).

Then, three discriminant functions $f_A (x)$, $f_B (x)$, and $f_C (x)$ using the kernel function $K_Z (X, Y)$ are calculated (Step S15), and thereafter, the values of the calculated discriminant functions $f_Z (x)$ are compared, and the tire type with the discriminant function showing the largest value is determined to be the tire type for the road surface on which the tire 1 is running (Step S16).

Next, it is judged whether the tire has rotated N times or not, in other words, whether the determinations have been made N times or not (Step S17), and if the number of determinations is less than N times, the process returns to Step S10 and the internal pressure Pa and the tire internal temperature Ta are measured.

In step S17, when the number of determinations has reached N times, the tire type with the highest frequency of the judgment result is determined to be the tire type of the tire concerned (Step S18).

More specifically, when the number of times the tire type was judged as A is $n_A$, the number of times the tire type was judged as B is $n_B$, and the number of times the tire type was judged as C is $n_C$ ($n_A + n_B + n_C = N$), the tire type of tire with the largest $n_Z$ is determined to be the tire type of the tire concerned.

As described above, in the first embodiment, since the tire type of the tire mounted on the vehicle was determined from the acceleration waveform, which is the output waveform of the acceleration sensor 11 attached to the tire 1, it became possible to determine the tire type at the vehicle side.

Furthermore, since the tire type was determined on the basis of the feature vector $X_i$ extracted from the acceleration waveforms and the determination model in which the feature vector calculated for each tire type in advance has been configured as training data, the tire type determination accuracy has been improved.

In addition, since the support vector machine was used as the machine learning algorithm and the GA kernel function $K_Z (X, Y)$ was used as the kernel function, the tire type determination can be performed without depending on the vehicle speed.

Furthermore, since the internal pressure Pa and the tire internal temperature Ta were added as the components of the feature vector $X_I$, the tire type determination accuracy has been further improved.

In the first embodiment above, the tire types Z used were three types of summer tire of different manufacturers, A, B and C. However, two types of summer tires and studless tires may be used, for example. Alternatively, four or more types of studless tires with different tread patterns may be used.

In the first embodiment above, as the acceleration data $a_{ik}$ which is the component of the feature vector $X_i$, the power value $x_{ik}$ of the filter filtrated wave was used, however, the time-varying variance of the power value $x_{ik}$ of the filter filtrated wave may also be used. The time-varying variance may be expressed as $\log[x_{ik}(t)^2 + x_{ik}(t-1)^2]$.

Alternatively, as the acceleration data $a_{ik}$ which is the component of the feature vector $X_i$, the Fourier coefficient, which is the vibration level in a specific frequency band when the tire vibration time-series waveform is Fourier transformed may be used, or a Cepstrum coefficient may be used.

The Cepstrum can be obtained by assuming the waveform after the Fourier transform as a spectral waveform and then Fourier transforming it again, or by assuming the AR spectrum as a waveform and then obtaining the AR coefficient (LPC Cepstrum), which allows characterizing the shape of the spectrum without being affected by the absolute level, hence the determination accuracy is further improved compared to the case where the frequency spectrum obtained by the Fourier transform is used.

In the first embodiment above, the acceleration sensor 11 was disposed so that the detection direction of the acceleration sensor 11 coincides with the tire circumferential direction, however, the detection direction may be in the tire radial direction, and the acceleration data $a_{ik}$, which is the component of the feature vector $X_i$, may be extracted from the radial acceleration waveform or from the differential waveform of the radial acceleration waveform.

Second Embodiment

In the first embodiment above, the support vector machine was used as the machine learning algorithm, however, the tire type can also be determined by classification by the decision tree.

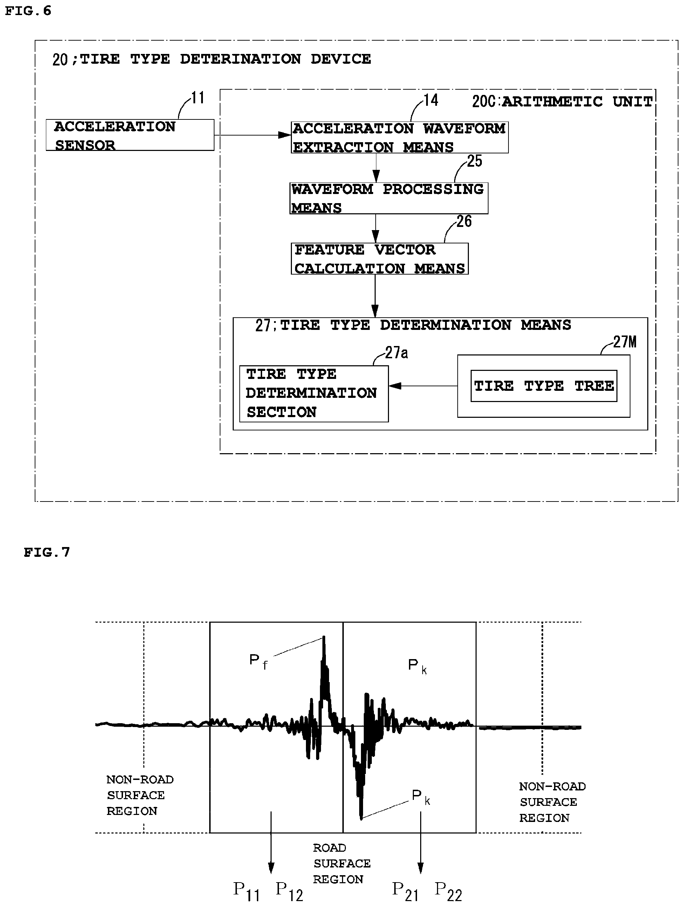

FIG. 6 illustrates the configuration of the tire type determination device 20 according to a second embodiment. The tire type determination device 20 includes an acceleration sensor 11, an acceleration waveform extraction means 14, a waveform processing means 25, a feature vector calculation means 26, and a tire type determination means 27. In the figure, the sign 20C denotes an arithmetic unit, which is, like the arithmetic unit 10C, configured of, for example, computer software and a memory such as a RAM or the like, and is disposed in the tire 1.

Those with the same signs as in the first embodiment have the same configurations as that in the first embodiment, so explanations thereof are omitted.

The waveform processing means 25 converts the extracted acceleration waveforms into acceleration waveforms having only predetermined frequency components (hereinafter referred to as post-filtered waveforms) by passing the extracted acceleration waveforms through the LPF and the HPF, respectively, and extracts a waveform of the first half and a waveform of the second half of the post-filtered waveform. Incidentally, as illustrated in FIG. 7, the first half waveform refers to the waveform appearing from the time of the start of the road surface region to the time of the ground contact center (intermediary between the time of the step-in point $P_f$ and the time of the kick-out point $P_k$), and the second half waveform refers to the waveform appearing from the time of the ground contact center to the end of the road surface region.

In this embodiment, the LPF which extracts only the frequency components of 1 kHz or below, and the HPF which extracts only the frequency components of 2 kHz or above, were used.

The feature vector calculation means 26 calculates, from the first half waveform and the second half waveform, the RMS value $P_{11}$ of the first half of 1 kHz or below, the RMS value $P_{21}$ of the second half of 1 kHz or below, the RMS value $P_{12}$ of the first half of 2 kHz or above, and the RMS value $P_{22}$ of the second half of 2 kHz or above and calculates first to third determination values $Q_k$ from these RMS values, and sets these determination values $Q_k$ as the components of the feature vector X.

In this embodiment, $Q_1 = P_{12}/P_{11}$, $Q_2 = P_{12}/P_{22}$, and $Q_3 = P_{11}/P_{12}$.

That is, the feature vector $X = (Q_1, Q_2, Q_3)$.

Incidentally, since the magnitude of acceleration depends on the tire rotation speed, the influence of the tire rotation speed can be reduced by using, as the component of the feature vector X as in this embodiment, the determination value Q which is the ratio of the RMS value P.

The tire type determination means 27 includes a tire type determination section 27a and a storage section 27M, and uses a "decision tree", which is one of the methods of the machine learning algorithm, to determine the tire type of the tire 1 mounted on the vehicle.

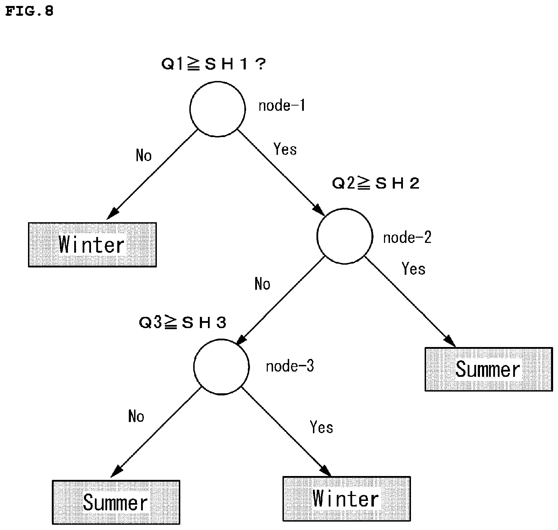

As illustrated in FIG. 8, the "decision tree" includes a plurality of branches (node-1 to node-3) and a conditional expression provided for each of the branches.

In this embodiment, the conditional expressions are set to $Q_1 \geq SH1$, $Q_2 \geq SH2$, and, $Q_3 \geq SH3$.

The first to third thresholds SH1, SH2 and SH3 used in the conditional expressions, and to which branch which of the conditional equations is to be allocated, are calculated by learning using, as training data, the plurality of feature vectors $X = (Q_{1j}, Q_{2j}, Q_{3j})$ calculated from the acceleration waveforms obtained by running, at various speeds, a test vehicle equipped with multiple types of tires (in this case, two types of the summer tire and the winter tire) with the acceleration sensor 11 attached thereto, and are stored as a "tire type tree" in the storage section 27M.

The tire type determination section 27a determines the tire type of the tire concerned by inputting the feature vectors $X = (Q_{1j}, Q_{2j}, Q_{3j})$ calculated by the feature vector calculation means 26 to each branch of the "tire type tree" stored in the storage section 27M.

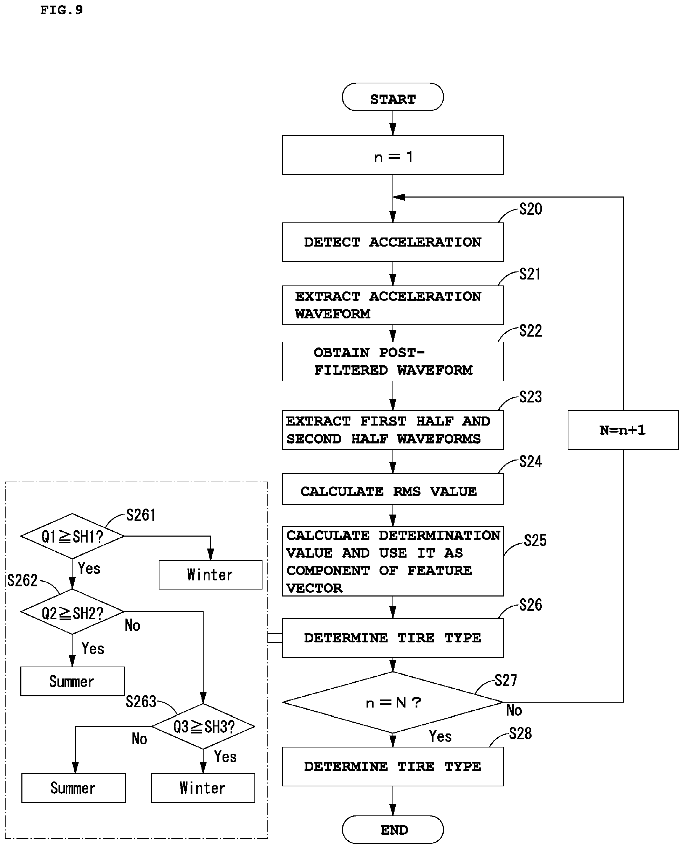

Next, the tire type determination method using the tire type determination device 20 will be described with reference to the flowchart in FIG. 9.

Also, in this embodiment, the tire type determination is performed for every one rotation of the tire and the tire type is determined by majority decision of N rotations.

First, the acceleration input to the tire 1 by the acceleration sensor 11 is detected (Step S20), and then the acceleration waveform, which is the time-series waveform of the tire vibration, is extracted from the detected acceleration signal (Step S21).

Next, the post-filtered waveform is obtained from the acceleration waveform (Step S22), and thereafter the first half and the second half of the post-filtered waveform are extracted (Step S23).

Next, the four RMS values $P_{11}$, $P_{21}$, $P_{12}$, and $P_{22}$ are calculated from the extracted first half of the post-filtered waveform and the extracted second half of the post-filtered waveform (Step S24).

In Step S25, the determination values $Q_1$, $Q_2$, and $Q_3$ are calculated from these calculated RMS values, and using these determination values as components of the feature vector to be input to the "tire type tree." In Step S25, the feature vector is input to the "tire type tree" to determine the tire type of the tire concerned.

The details of Step S26 are as follows.

First, in Step S261, the first determination value $Q_1$ is compared with the first threshold value SH1, and if $Q_1 < SH1$, it is determined that the tire is a winter tire (winter), and if $Q_1 \geq SH1$, the process proceeds to Step S262 and the second determination value $Q_2$ is com-

pared with the second threshold value SH2. If $Q_2 \geq$ SH2, it is determined that the tire is a summer tire (Summer), and if $Q_2 <$ SH2, the process proceeds to Step S263 and the third determination value $Q_3$ is compared with the third threshold value SH3. If $Q_3 \geq$ SH3, it is determined that the tire is a winter tire, and if $Q_3 <$ SH3, it is determined that the tire is a summer tire.

After determining the tire type for one rotation, it is determined whether the tire has made N rotations or not, that is, whether the determinations have been made N times or not (Step S26), and if the number of determinations is less than N times, the process returns to Step S20 to detect the acceleration. Also, in this embodiment, the number of rotations N is set to 100 times.

In Step S26, if the number of determinations reaches N times, the tire type with the highest frequency of the judgment result is determined to be the tire type of the tire concerned.

Specifically, when the number of times the tire type is judged as the summer tire is $n_S$ and the number of times the tire type is judged as the winter tire is $n_W$. If $n_S > n_W$, the tire type of the tire concerned is judged to be the summer tire, and if $n_S < n_W$, the tire type of the tire concerned is judged to be a winter tire.

Third Embodiment

In the second embodiment, the "decision tree" was used as the machine learning algorithm. However, the tire type can also be determined by classification by the decision tree.

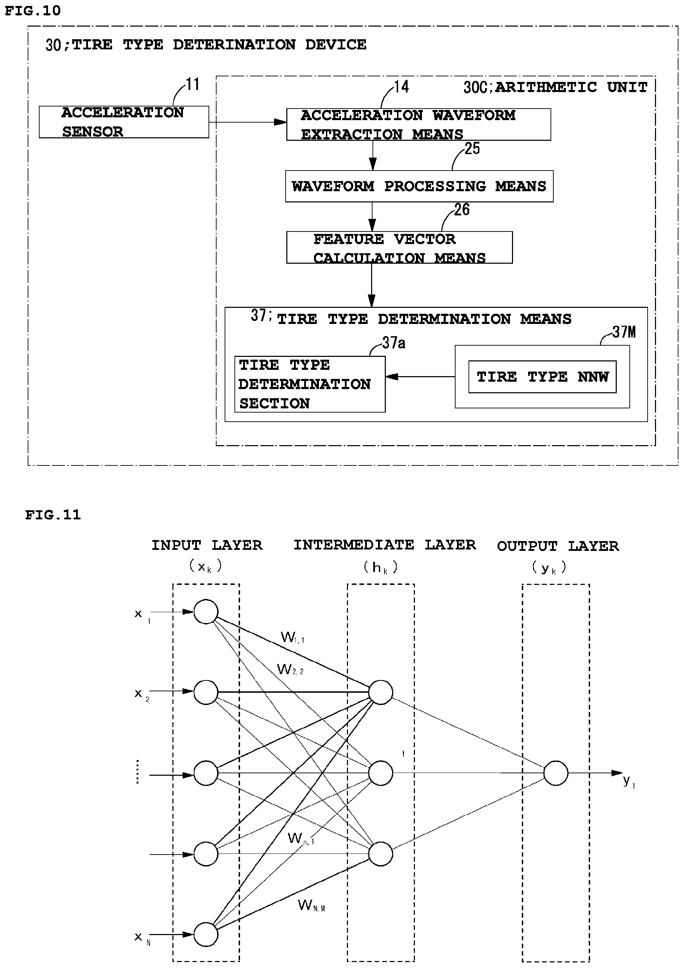

FIG. 10 illustrates the configuration of the tire type determination device 30 according to a third embodiment. The tire type determination device 30 includes the acceleration sensor 11, the acceleration waveform extraction means 14, a waveform processing means 25, a feature vector calculation means 26, and a tire type determination means 37. In the figure, the sign 30C denotes an arithmetic unit, which is, like the arithmetic unit 20C, configured of, for example, computer software and a memory such as a RAM or the like, and is disposed in the tire 1.

Those with the same signs as in the second embodiment have the same configurations as that in the second embodiment, so explanations thereof are omitted.

The tire type determination means 37 includes a tire type determination section 37a and a storage section 37M, and uses the neural network, which is one of the methods of the machine learning algorithm, to determine the tire type of the tire 1 mounted on the vehicle.

As shown in Figure 11, the neural network is configured of three layers which are an input layer ($x_k$), a middle layer ($h_k$), and an output layer ($y_k$). The middle layer may be two or more layers.

The input layer, the middle layer and the output layer are each composed of multiple neurons, each of which has a certain function, as indicated by the circles in the figure, and the neurons in the later layer are synaptically coupled to all the neurons in the previous layer with the weight $W_{n,m}$, which is a parameter that can be updated by learning.

In the storage section 37M, the parameters such as the number of neurons and the weight $W_{n,m}$ of the input layer ($x_k$), the middle layer ($h_k$) and the output layer($y_k$), which were obtained by learning using, as the teacher data, the plurality of feature vectors Y = ($Q_{1j}$, $Q_{2j}$, $Q_{3j}$) calculated from the acceleration waveforms obtained by running, at various speeds, a test vehicle equipped with multiple types of tires (in this case, two types of the summer tire and the winter tire) with the acceleration sensor 11 attached thereto, have been stored as the "tire type NNW."

The tire type determination section 37a determines, using the input data $x_k$ (k = 1- n) as the first to third determination values $Q_k$ (k = 1, 2, 3) calculated by the feature vector calculation means 26, whether the tire having these determination values $Q_k$ is a summer tire or a winter tire.

As the method of determining the tire type, the method may be carried out by specifying the output value to $0 \leq y \leq 1$, for example, and if $y \geq 0.5$, determining that the tire is a summer tire, and if $y < 0.5$, determining that the tire is a winter tire.

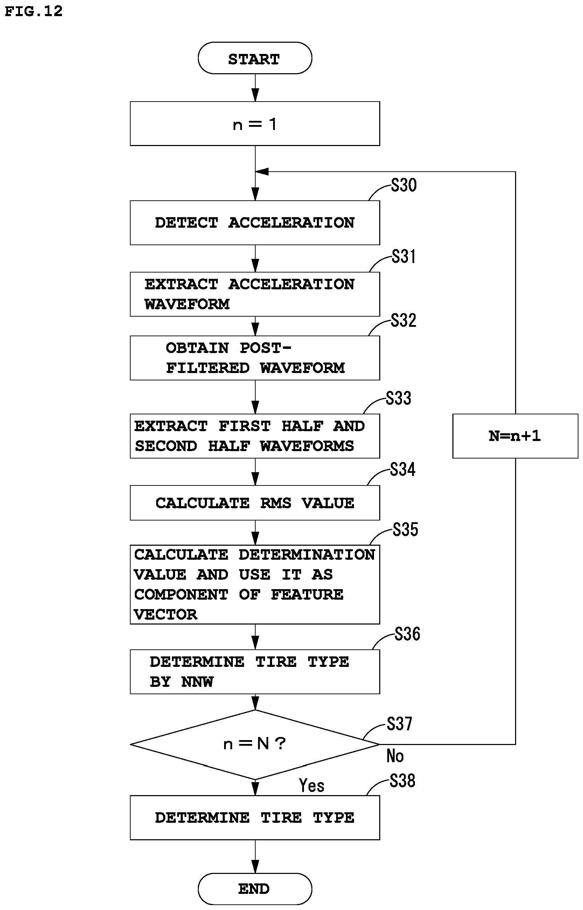

Next, the tire type determination method using the tire type determination device 30 will be described with reference to the flowchart of FIG. 12.

Also, in this embodiment, the tire type determination is performed for every one rotation of the tire and the tire type is determined by majority decision of N rotations. In this embodiment, the number of rotations N was also set to 100 times.

First, after detecting the acceleration input to the tire 1 by the acceleration sensor 11 (Step S30), the acceleration waveform, which is the time-series waveform of the tire vibration, is extracted from the detected acceleration signal (Step S31).

Next, after obtaining the post-filtered waveform from the acceleration waveform (Step S32), the first half and the second half of the post-filtered waveform are extracted (Step S33).

Next, the four RMS values $P_{11}$, $P_{21}$, $P_{12}$ and $P_{22}$ are calculated from the extracted first half of the post-filtered waveform and the second half of the post-filtered waveform (Step S34).

In Step S35, the determination values $Q_1$, $Q_2$, and $Q_3$ are calculated from the calculated RMS values, and these determination values are input to the "tire type NNW" to determine the tire type of the tire concerned.

In Step S35, the tire type of the tire concerned is determined, from the calculated RMS values, by inputting the determination values $Q_1$, $Q_2$, and $Q_3$.

After determining the tire type for one rotation, it is determined whether the tire has made N rotations or not, that is, whether the determinations have been made N times or not (Step S36), and if the determination is less than N times, the process returns to Step 30to detect the acceleration.

In step S36, if the number of judgments reaches N times, the tire type with the highest frequency of the judgment result is determined to be the tire type of the tire concerned.

Specifically, when the number of times the tire type was judged as a summer tire is $n_S$ and the number of times the tire type was judged as a winter tire is $n_W$, if $n_S > n_W$, the tire type of the tire is determined to be the summer tire, and if $n_S < n_W$, the tire type of the tire is judged to be the winter tire.

In the second and third embodiments above, the judgment value Q, which is an arithmetic value (ratio) of the RMS value P, was used as the component of the feature vector X. However, the RMS value P may be directly used as the component of the feature vector X if the determination of the tire type is performed only in a case where the vehicle speed is a predetermined vehicle speed.

In this case, the RMS value may be obtained by dividing the acceleration waveform into the first half waveform and the second half waveform, or the RMS value may be the entire waveform in the road surface region.

Also, in the second and third embodiments, the tire type determination may be performed by using the tire internal pressure and the tire internal temperature as components of the feature vector.

Regarding the filtering process, if the LPF that extracts only the frequency components of 1 kHz or below, the HPF that extracts only the frequency components of 1 kHz or above, the HPF that extracts only the frequency components of 3 kHz or above, and the HPF that extracts only the frequency components of 4 kHz or above are combined, the RMS values in the ranges of 0-1 kHz, 1-2 kHz, 2-3 kHz, 3-4 kHz, and 4-5 kHz may be used as components of the feature vector X.

In the first to third embodiments above, the tire type determination means (17, 27, 37) are provided in the tire to determine the tire type, however, the tire type determination means may be provided on the vehicle side to send the feature vector calculated on the tire 1 side to the vehicle side. Alternatively, data such as the acceleration waveform, the tire internal pressure and the tire internal temperature may be sent to the vehicle to determine the tire type at the vehicle side.

In the first to third embodiments above, the number of rotations N was set to 100 times, however, the determination of the tire type can be performed with at least three times of rotations. As the number of rotations N, 20 times or more is preferrable, and 100 times are even more preferable.

The tire type determination may be performed by incorporating the vehicle speed, the outside temperature, and other factors as components of the feature vector.

Example

As an example of the determination accuracy of discriminating between the summer tire and the winter tire is shown below.

(1) Support vector machine $\rightarrow$ 100%.
(2) Decision tree $\rightarrow$ 90%
(3) Neural network $\rightarrow$ 90%

When the determinations were performed, by the support machine, on summer tires of manufacturers, which are the company A, the company B and the company C, separately, the determination accuracy was 88%.

REFERENCE SIGN LIST

1: tire, 2: inner liner section, 3: tire air chamber, 4: tread, 5: rim, 10: tire type determination device, 11: acceleration sensor, 12: pressure sensor, 13: temperature sensor, 14: acceleration waveform extraction means, 15: windowing means, 16: feature vector calculation means, 17: tire type determination means, 17a: Kernel function calculation section, 17b: tire type determination section, 17M: storage section.

**Claims**

1.  A method of determining a tire type, which is the tire type of a tire (1), from an output of an acceleration sensor (11) attached to an inner surface side of a tire tread (4) of a tire (1) mounted on a vehicle, the method comprising:

    a step of detecting an acceleration waveform from the output of the acceleration sensor (11);
    a step of extracting a feature vector from the acceleration waveform; and
    a step of determining, from the extracted feature vector, the tire type of the tire (1) by a machine learning algorithm,
    **characterized in that**, the step of determining the tire type includes determining the tire type of the tire (1) on the basis of the extracted feature vector and a determination model in which a feature vector obtained in advance for each tire type has been configured as learning data.

2.  The method of determining a tire type according to claim 1, wherein the feature vector is a vibration level in a specific frequency region of the acceleration waveform.

3.  The method of determining a tire type according to claim 1 or 2, wherein one or both of a tire internal pressure and a tire internal temperature are added as components of the feature vector.

4. The method of determining a tire type according to any of claims 1 to 3, wherein the machine learning algorithm is a support vector machine.

5. The method of determining a tire type according to claim 4, wherein, in the step of extracting the feature vector, a time-series waveform in each time window is extracted by multiplying a window function of a predetermined time width to the detected acceleration waveform, and the feature vector is calculated respectively from the time-series waveform in each time window, and
wherein, in the step of determining the tire type, after calculating a kernel function from the calculated feature vector in each time window and the tire type feature vector, which is the feature vector in each time window calculated from a previously calculated acceleration waveform obtained for each tire type, the tire type of the tire (1) concerned is determined on the basis of a value of a discriminant function using the kernel function.

6. The method of determining a tire type according to any of claims 1 to 3, wherein the machine learning algorithm is a decision tree.

7. The method of determining a tire type according to claim 6, wherein the feature vector is an arithmetic value of a vibration level in a specific frequency region of the acceleration waveform.

8. The method of determining a tire type according to any of claims 1 to 3, wherein the machine learning algorithm is a neural network.

9. The method of determining a tire type according to claim 8, wherein the feature vector is an arithmetic value of a vibration level in a specific frequency region of the acceleration waveform.

10. A device for determining a tire type (10), which is the type of a tire (1) mounted on a vehicle, comprising:

an acceleration sensor (11) attached to an inner surface side of a tire tread (4) of the tire (1);
an acceleration waveform extraction means (14) that extracts an acceleration waveform from an output of the acceleration sensor (11);
a feature vector extraction means that extracts a from the acceleration waveform; and
a tire type determination means (17) that determines, from the extracted feature vector, the tire type of the tire (1) by a machine learning algorithm,
**characterized in that** the tire type determination means (17) determines the tire type of the tire (1) on the basis of the extracted feature vector and a determination model in which a feature vector obtained in advance for each tire type has been configured as learning data.

**Patentansprüche**

1. Verfahren zum Bestimmen eines Reifentyps, welcher der Reifentyp eines Reifens (1) ist, von einer Ausgabe eines Beschleunigungssensors (11), der an einer inneren Oberflächenseite einer Reifenlauffläche (4) eines an einem Fahrzeug montierten Reifens (1) angebracht ist, wobei das Verfahren Folgendes umfasst:

einen Schritt des Detektierens einer Beschleunigungswellenform von der Ausgabe des Beschleunigungssensors (11);
einen Schritt des Extrahierens eines Merkmalsvektors aus der Beschleunigungswellenform; und
einen Schritt des Bestimmens, aus dem extrahierten Merkmalsvektor, des Reifentyps des Reifens (1) durch einen Maschinenlernalgorithmus,
**dadurch gekennzeichnet, dass** der Schritt des Bestimmens des Reifentyps Folgendes einschließt:
Bestimmen des Reifentyps des Reifens (1) basierend auf dem extrahierten Merkmalsvektor und einem Bestimmungsmodell, in dem ein im Vorhinein für jeden Reifentyp erhaltener Merkmalsvektor als Lerndaten konfiguriert worden ist.

2. Verfahren zum Bestimmen eines Reifentyps nach Anspruch 1, wobei der Merkmalsvektor ein Vibrationspegel in einem konkreten Frequenzbereich der Beschleunigungswellenform ist.

3. Verfahren zum Bestimmen eines Reifentyps nach Anspruch 1 oder 2, wobei eines oder beide von einem Reifeninnendruck und einer Reifeninnentemperatur als Komponenten des Merkmalsvektors hinzugefügt werden.

4. Verfahren zum Bestimmen eines Reifentyps nach einem der Ansprüche 1 bis 3, wobei der Maschinenlernalgorithmus eine Support Vector Machine ist.

5. Verfahren zum Bestimmen eines Reifentyps nach Anspruch 4, wobei im Schritt des Extrahierens des Merkmalsvektors eine Zeitreihenwellenform in jedem Zeitfenster extrahiert wird durch Multiplizieren einer Fensterfunktion einer vorbestimmten Zeitbreite zu der detektierten Beschleunigungswellenform, und der Merkmalsvektor jeweils aus der Zeitreihenwellenform in jedem Zeitfenster berechnet wird, und wobei, im Schritt des Bestimmens des Reifentyps, nach dem Berechnen einer Kernel-Funktion aus dem berechneten Merkmalsvektor in jedem Zeitfenster und dem Reifentypmerkmalsvektor, bei dem es sich um den Merkmalsvektor in jedem Zeitfenster handelt, der aus einer zuvor berechneten Beschleunigungswellenform berechnet wird, die für jeden Reifentyp erhalten wird, der Reifentyp des betreffenden Reifens (1) basierend auf einem Wert einer Diskriminanzfunktion unter Verwendung der Kernel-Funktion bestimmt wird.

6. Verfahren zum Bestimmen eines Reifentyps nach einem der Ansprüche 1 bis 3, wobei der Maschinenlernalgorithmus ein Entscheidungsbaum ist.

7. Verfahren zum Bestimmen eines Reifentyps nach Anspruch 6, wobei der Merkmalsvektor ein arithmetischer Wert eines Vibrationspegels in einem konkreten Frequenzbereich der Beschleunigungswellenform ist.

8. Verfahren zum Bestimmen eines Reifentyps nach einem der Ansprüche 1 bis 3, wobei der Maschinenlernalgorithmus ein neuronales Netzwerk ist.

9. Verfahren zum Bestimmen eines Reifentyps nach Anspruch 8, wobei der Merkmalsvektor ein arithmetischer Wert eines Vibrationspegels in einem konkreten Frequenzbereich der Beschleunigungswellenform ist.

10. Vorrichtung zum Bestimmen eines Reifentyps (10), welcher der Typ eines an einem Fahrzeug montierten Reifens (1) ist, Folgendes umfassend:

einen Beschleunigungssensor (11), der an einer inneren Oberflächenseite einer Reifenlauffläche (4) des Reifens (1) angebracht ist; ein Beschleunigungswellenformextraktionsmittel (14), das eine Beschleunigungswellenform von einer Ausgabe des Beschleunigungssensors (11) extrahiert; ein Merkmalsvektorextraktionsmittel, das einen aus der Beschleunigungswellenform extrahiert; und ein Reifentypbestimmungsmittel (17) das, aus dem extrahierten Merkmalsvektor, den Reifentyp des Reifens (1) durch einen Maschinenlernalgorithmus bestimmt, **dadurch gekennzeichnet, dass** das Reifentypbestimmungsmittel (17) den Reifentyp des Reifens (1) basierend auf dem extrahierten Merkmalsvektor und einem Bestimmungsmodell bestimmt, in dem ein im Vorhinein für jeden Reifentyp erhaltener Merkmalsvektor als Lerndaten konfiguriert worden ist.

## Revendications

1. Procédé de détermination d'un type de pneumatique, constituant le type de pneumatique d'un pneumatique (1), à partir d'une sortie d'un capteur d'accélération (11) fixé sur un côté de surface interne d'une bande de roulement de pneumatique (4) d'un pneumatique (1) monté sur un véhicule, le procédé comprenant ;

une étape de détection d'une forme d'onde d'accélération à partir de la sortie du capteur d'accélération (11) ; une étape d'extraction d'un vecteur de caractéristiques à partir de la forme d'onde d'accélération ; et une étape de détermination, à partir du vecteur de caractéristiques extrait, du type de pneumatique du pneumatique (1) par un algorithme d'apprentissage automatique ; **caractérisé en ce que** l'étape de détermination du type de pneumatique inclut : la détermination du type de pneumatique du pneumatique (1) sur la base du vecteur de caractéristiques extrait et d'un modèle de détermination dans lequel un vecteur de caractéristiques obtenu à l'avance pour chaque type de pneumatique a été configuré en tant que données d'apprentissage.

2. Procédé de détermination d'un type de pneumatique selon la revendication 1, dans lequel le vecteur de caractéristiques est un niveau de vibration dans une région à fréquence spécifique de la forme d'onde d'accélération.

3. Procédé de détermination d'un type de pneumatique selon la revendication 1 ou 2, dans lequel l'une ou les deux parmi une pression de pneumatique interne et une température de pneumatique interne sont ajoutées comme composants du vecteur de caractéristiques.

4. Procédé de détermination d'un type de pneumatique selon l'une quelconque des revendications 1 à 3, dans lequel l'algorithme d'apprentissage automatique est une machine à vecteurs de support.

5. Procédé de détermination d'un type de pneumatique selon la revendication 4, dans lequel, lors de l'étape d'extraction du vecteur de caractéristiques, une forme d'onde de série temporelle dans chaque fenêtre de temps est extraite en multipliant une fonction de fenêtre d'une largeur temporelle prédéterminée à la forme d'onde d'accélération détectée, et le vecteur de caractéristiques est respectivement calculé à partir de la forme d'onde de série temporelle dans chaque fenêtre de temps, et

dans lequel, lors de l'étape de détermination du type de pneumatique, après le calcul d'une fonction de noyau à partir du vecteur de caractéristiques calculé dans chaque fenêtre de temps et du vecteur de caractéristiques de type de pneumatique qui constitue le vecteur de caractéristiques dans chaque fenêtre de temps calculé à partir d'une forme d'onde d'accélération calculé auparavant, obtenue pour chaque type de pneumatique, le type de pneumatique du pneumatique (1) concerné est déterminé sur la base d'une valeur d'une fonction discriminante en utilisant la fonction de noyau.

6. Procédé dé détermination d'un type de pneumatique selon l'une quelconque des revendications 1 à 3, dans lequel l'algorithme d'apprentissage automatique est un arbre de décision.

7. Procédé de détermination d'un type de pneumatique selon la revendication 6, dans lequel le vecteur de caractéristiques est une valeur arithmétique d'un niveau de vibration dans une région à fréquence spécifique de la forme d'onde d'accélération.

8. Procédé de détermination d'un type de pneumatique selon l'une quelconque des revendications 1 à 3, dans lequel l'algorithme d'apprentissage automatique est un réseau neuronal.

9. Procédé de détermination d'un type de pneumatique selon la revendication 8, dans lequel le vecteur de caractéristiques est une valeur arithmétique d'un niveau de vibration dans une région à fréquence spécifique de la forme d'onde d'accélération.

10. Dispositif pour déterminer un type de pneumatique (10), constituant le type d'un pneumatique (1) monté sur un véhicule, comprenant :

un capteur d'accélération (11) fixé sur un côté de surface interne d'une bande de roulement de pneumatique (4) du pneumatique (1) ;
un moyen d'extraction de forme d'onde d'accélération (14) qui extrait une forme d'onde d'accélération à partir d'une sortie du capteur d'accélération (11) ;
un moyen d'extraction de vecteur de caractéristiques qui extrait un à partir de la forme d'onde d'accélération ; et
un moyen de détermination de type de pneumatique (17) qui détermine, à partir du vecteur de caractéristiques extrait, le type de pneumatique du pneumatique (1) par un algorithme d'apprentissage automatique,
**caractérisé en ce que** le moyen de détermination de type de pneumatique (17) détermine le type de pneumatique du pneumatique (1) sur la base du vecteur de caractéristiques extrait et d'un modèle de détermination dans lequel un vecteur de caractéristiques obtenu à l'avance pour chaque type de pneumatique a été configuré en tant que données d'apprentissage.

FIG.1

**10 ;TIRE TYPE DETERMINATION DEVICE**

10C:ARITHMETIC UNIT

```
ACCELERATION          11
SENSOR
```

```
ACCELERATION WAVEFORM      14
EXTRACTION SENSOR
```

```
PRESSURE SENSOR       12
```

```
WINDOWING MEANS       15
```

```
TEMEPERATURE          13
SENSOR
```

```
FEATURE VECTOR        16
CALCULATION MEANS
```

**17:;TIRE TYPE DETERMINATION MEANS**          17M

```
KERNEL FUNCTION       17a
CALCULATION
SECTION
```

```
TIRE TYPE MODEL
A
```
```
TIRE TYPE MODEL
B
```
```
TIRE TYPE MODEL
C
```

```
TIRE TYPE            17b
DETERMINATION
SECTION
```

FIG.2

FIG.3

FIG.4

FIG.5

```
                    ┌──────────┐
                    │  START   │
                    └────┬─────┘
                         │
              ┌──────────▼──────────┐
              │       n = 1         │
              └──────────┬──────────┘
                         │                              ┌──S10
              ┌──────────▼──────────────────┐
              │ DETECT ACCELERATION, AND     │
              │ MEASURE TIRE INTERNAL PRESSURE│
              │ AND TIRE INTERNAL TEMPERATURE │
              └──────────┬──────────────────┘
                         │                              ┌──S11
              ┌──────────▼──────────────────┐
              │ EXTRACT ACCELERATION WAVEFORM │
              └──────────┬──────────────────┘
                         │                              ┌──S12
              ┌──────────▼──────────────────┐
              │ EXTRACT ACCELERATION         │
              │ WAVEFORM IN EACH TIME WINDOW │
              │ BY WINDOWING WITH TIME T     │
              └──────────┬──────────────────┘
                         │                              ┌──S13
              ┌──────────▼──────────────────┐     ┌──────────────────────┐
              │ CALCULATE FEATURE VECTOR Xi   │     │       N=n+1          │
              └──────────┬──────────────────┘     └──────────────────────┘
                         │                              ┌──S14
              ┌──────────▼──────────────────┐
              │ CALCULATE GA KERNEL KZ(XY)   │
              │  Z: TIRE TYPES A, B, C       │
              └──────────┬──────────────────┘
                         │                              ┌──S15
              ┌──────────▼──────────────────┐
              │ CALCULATE DISCRIMINANT        │
              │ FUNCTION fz                   │
              └──────────┬──────────────────┘
                         │                              ┌──S16
              ┌──────────▼──────────────────┐
              │ DETERMINE TIRE TYPE          │
              └──────────┬──────────────────┘
                         │                          ┌──S17
                   ◇─────▼─────◇
                  ◇   n = N ?   ◇────No
                   ◇───────────◇
                         │ Yes                      ┌──S18
              ┌──────────▼──────────────────┐
              │ DETERMINE TIRE TYPE          │
              └──────────┬──────────────────┘
                         │
                    ┌────▼─────┐
                    │   END    │
                    └──────────┘
```

14

FIG.6

20;TIRE TYPE DETERINATION DEVICE

20C:ARITHMETIC UNIT

ACCELERATION SENSOR — 11

ACCELERATION WAVEFORM EXTRACTION MEANS — 14

WAVEFORM PROCESSING MEANS — 25

FEATURE VECTOR CALCULATION MEANS — 26

27; TIRE TYPE DETERMINATION MEANS

TIRE TYPE DETERMINATION SECTION — 27a

TIRE TYPE TREE — 27M

FIG.7

$P_f$

$P_k$

$P_k$

NON-ROAD SURFACE REGION

ROAD SURFACE REGION

NON-ROAD SURFACE REGION

$P_{11}$ $P_{12}$

$P_{21}$ $P_{22}$

FIG.8

$Q1 \geqq S H 1 ?$

node-1

No

Yes

$Q2 \geqq S H 2$

node-2

Winter

Yes

No

$Q3 \geqq S H 3$

node-3

Summer

No

Yes

Summer

Winter

FIG.9

START

n = 1

DETECT ACCELERATION — S20

EXTRACT ACCELERATION WAVEFORM — S21

OBTAIN POST-FILTERED WAVEFORM — S22

EXTRACT FIRST HALF AND SECOND HALF WAVEFORMS — S23

CALCULATE RMS VALUE — S24

CALCULATE DETERMINATION VALUE AND USE IT AS COMPONENT OF FEATURE VECTOR — S25

DETERMINE TIRE TYPE — S26

n = N ? — S27

No → N=n+1

Yes

DETERMINE TIRE TYPE — S28

END

S261 — Q1≧SH1? — No → Winter

Yes

S262 — Q2≧SH2? — No

Yes

Summer

S263 — Q3≧SH3? — No → Summer

Yes → Winter

17

FIG.10

30;TIRE TYPE DETERINATION DEVICE

11 ACCELERATION SENSOR

14 ACCELERATION WAVEFORM EXTRACTION MEANS    30C;ARITHMETIC UNIT

25 WAVEFORM PROCESSING MEANS

26 FEATURE VECTOR CALCULATION MEANS

37; TIRE TYPE DETERMINATION MEANS

37a TIRE TYPE DETERMINATION SECTION

37M TIRE TYPE NNW

FIG.11

INPUT LAYER ($x_k$)   INTERMEDIATE LAYER ($h_k$)   OUTPUT LAYER ($y_k$)

$x_1$

$x_2$

$x_N$

$W_{1,1}$

$W_{2,2}$

$W_{n,1}$

$W_{N,M}$

$y_1$

FIG.12

START

↓

n = 1

↓

DETECT ACCELERATION ⌐S30

↓

EXTRACT ACCELERATION WAVEFORM ⌐S31

↓

OBTAIN POST-FILTERED WAVEFORM ⌐S32

↓

EXTRACT FIRST HALF AND SECOND HALF WAVEFORMS ⌐S33

↓

CALCULATE RMS VALUE ⌐S34

↓

CALCULATE DETERMINATION VALUE AND USE IT AS COMPONENT OF FEATURE VECTOR ⌐S35

↓

DETERMINE TIRE TYPE BY NNW ⌐S36

↓

n = N ? ⌐S37

No → N=n+1

Yes ⌐S38

↓

DETERMINE TIRE TYPE

↓

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018026111 A

- JP 2017043147 A